(19) Europäisches Patentamt / European Patent Office / Office européen des brevets

(11) **EP 4 316 783 A1**

(12) **EUROPEAN PATENT APPLICATION**
published in accordance with Art. 153(4) EPC

(43) Date of publication:
**07.02.2024 Bulletin 2024/06**

(21) Application number: **22847524.0**

(22) Date of filing: **11.07.2022**

(51) International Patent Classification (IPC):
**B29C 64/264** (2017.01)    **B33Y 30/00** (2015.01)

(86) International application number:
**PCT/CN2022/104854**

(87) International publication number:
**WO 2023/240721 (21.12.2023 Gazette 2023/51)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **16.06.2022   CN 202210681402**

(71) Applicant: **Shenzhen Anycubic Technology Co., Ltd.**
**Shenzhen, Guangdong 518000 (CN)**

(72) Inventor: **LU, Shenghai**
**Shenzhen, Guangdong 518000 (CN)**

(74) Representative: **Haseltine Lake Kempner LLP**
**Cheapside House**
**138 Cheapside**
**London EC2V 6BJ (GB)**

(54) **LIGHT SOURCE ASSEMBLY AND 3D PRINTER**

(57)    A first light transmitting assembly mainly uniformizes light, and a second light transmitting assembly mainly collimates the light, such that the light projected to a display screen can accurately cure resin. The light source assembly includes a light emitting assembly, a first light transmitting assembly and a second light transmitting assembly. The light emitting assembly and the second light transmitting assembly are arranged on two opposite sides of the first light transmitting assembly respectively, and an outer profile of the second light transmitting assembly is of a cambered plate-like structure; and light emitted by the light emitting assembly are projected after being sequentially refracted by the first light transmitting assembly and the second light transmitting assembly. The present invention is mainly used for providing backlight for 3D printing.

*FIG. 1*

## Description

### TECHNICAL FIELD

The present invention relates to the technical field of three-dimensional (3D) printing, and in particular to a light source assembly and a 3D printer.

### BACKGROUND

In a photo-curing 3D printer, a resin vat is placed on a display screen of the printer after containing resin, a light source is located on the side of the display screen opposite to the resin vat, a light beam of the light source is projected onto the display screen, projected light cover the entire display area of the display screen, and the light pass through a pattern on the display screen and are projected onto the resin in the resin vat, such that the resin is cured layer by layer according to the preset pattern.

When the projected light are uniformly and perpendicularly projected to the display screen, the resin will be uniformly cured with excellent accuracy, thereby obtaining an excellent forming effect. In the prior art, in order to ensure the degree of collimation of the projected light, a filter device such as a tubular baffle is usually used to filter the large-angle light. This will weaken the light intensity of the projected light and limit the projected area. For example, the projected light from a single light source cannot cover the entire display area, and the degree of uniformity of the projected light cannot be ensured.

### SUMMARY

In view of this, embodiments of the present invention provide a light source assembly and a 3D printer. A first light transmitting assembly mainly uniformizes light, and a second light transmitting assembly mainly collimates the light, such that the light projected to a display screen can accurately cure resin.

In order to achieve the above objective, the present invention mainly provides the following technical solutions.

In an aspect, an embodiment of the present invention provides a light source assembly for use in a 3D printer. The light source assembly includes:

a light emitting assembly, a first light transmitting assembly and a second light transmitting assembly.

The light emitting assembly and the second light transmitting assembly are arranged on two opposite sides of the first light transmitting assembly respectively, and an outer profile of the second light transmitting assembly is of a cambered plate-like structure; and

light emitted by the light emitting assembly are projected after being sequentially refracted by the first light transmitting assembly and the second light transmitting assembly.

The second light transmitting assembly includes a first refractive surface, the first refractive surface being located on the side of the second light transmitting assembly opposite to the first light transmitting assembly;

the side of the second light transmitting assembly opposite to the first refractive surface is provided with a plurality of protrusions arranged in sequence from a central point M to the outside, the protrusions being cambered protrusions or circular-ring-shaped protrusions; and

the first refractive surface is a convex surface.

The plurality of protrusions are concentrically arranged with the central point M as a circle center.

A minimum perpendicular distance e between a top edge L of the protrusions and a tangent plane of first refractive surface is greater than or equal to 0.5 mm and less than or equal to 50 mm.

Distances between top edges L of adjacent protrusions are the same;

or distances between top edges L of adjacent protrusions are gradually reduced in a direction away from the central point M;

or distances i between top edges L of the adjacent protrusions 320 are greater than or equal to 0.5 mm and less than or equal to 50 mm.

The protrusion is formed by connecting a first cambered wall and a second cambered wall, the first cambered wall being closer to central point M than the second cambered wall;

a generatrix of the first cambered wall is consistent with an extension direction of an optical axis of the second light transmitting assembly;

or an included angle θ between a generatrix of the first cambered wall and an optical axis of the second light transmitting assembly satisfies the following equation:

$$\theta = A + Bx,$$

where A and B are both preset constants; and

x is a perpendicular distance between any point on the first cambered wall and the optical axis of the second light transmitting assembly, or x is a perpendicular distance between a top edge L of the protrusions and the optical axis of the second light transmitting assembly.

The protrusion is formed by connecting a first cambered wall and a second cambered wall, the first cambered wall being closer to central point M than the second cambered wall;

the second cambered wall is a spherical surface;

or the second cambered wall is an aspherical surface;

or the second cambered wall has a radius of curvature greater than or equal to $0.1\delta$ and less than or equal to $30\delta$, where $\delta$ is a diameter of a circumcircle of a display screen.

The protrusion is delimited by a first cambered wall, a second cambered wall and a connecting surface. The first cambered wall and the second cambered wall are connected to two sides of the connecting surface respectively, and a top edge L is composed of points on the connecting surface farthest from the first refractive surface;

the connecting surface is a cambered surface;

or the connecting surface is a spherical surface;

and/or the connecting surface has a radius greater than or equal to 0.1 mm and less than or equal to 10 mm.

The side of the second light transmitting assembly opposite to the first refractive surface is further provided with a central convex surface, the protrusion closest to the central point M is a central protrusion, the central protrusion is a circular-ring-shaped protrusion, and the central protrusion surrounds the central convex surface by one circle.

The first refractive surface is a spherical surface;

or the first refractive surface is an aspherical surface;

and/or the first refractive surface has a radius of curvature greater than or equal to $0.1\delta$ and less than or equal to 506, where $\delta$ is a diameter of a circumcircle of a display screen.

The first light transmitting assembly includes a third refractive surface and a fourth refractive surface that are opposite to each other.

The third refractive surface is a convex surface, and the light emitting assembly is arranged corresponding to the fourth refractive surface.

The third refractive surface is an aspherical surface; and

the second light transmitting assembly includes a first refractive surface. The first refractive surface is located on one side of the second light transmitting assembly opposite to the first light transmitting assembly, and the first refractive surface is an aspherical surface.

The aspherical surface satisfies the following equation:

$$z = \frac{c_x x^2 + c_y y^2}{1 + \sqrt{1 - (1+k_x)c_x^2 x^2 - (1+k_y)c_y^2 y^2}} + \sum_{n=2}^{10} A_{2n}\left[(1-B_{2n})x^2 + (1+B_{2n})y^2\right]^n$$

$$c_x = \frac{1}{R_x}, \quad c_y = \frac{1}{R_y}$$

where z is a vector height of a point (x, y) on the aspherical surface, , $c_x$ is a curvature of a vertex of the aspherical surface in an x direction, $R_x$ is a radius of curvature of the vertex of the aspherical surface in the x direction, $c_y$ is a curvature of the vertex of the aspherical surface in a y direction, $R_y$ is a radius of curvature of the vertex of the aspherical surface in the y direction, $k_x$ is a coefficient of the aspherical surface in the x direction, $k_y$ is a coefficient of the aspherical surface in the y direction, $A_{2n}$ and $B_{2n}$ are both high-order coefficients of the aspherical surface or correction coefficients of the aspherical surface, and n is a positive integer greater than or equal to 1.

The fourth refractive surface is one of a flat surface, a convex surface and a concave surface.

The fourth refractive surface includes a flat area and a conical area.

The conical area surrounds the flat area by one circle.

The light emitting assembly includes a light source and a substrate. An accommodating space is delimited by the substrate, the flat area and the conical area, and the light source is arranged on the substrate and located in the accommodating space.

The light emitted by the light emitting assembly enter the first light transmitting assembly through the flat area and the conical area.

The light source is a point light source;

or the light source is an area light source including a plurality of light emitting chips, a distance between two adjacent light emitting chips being less than or equal to a threshold.

A perpendicular distance b between a vertex of the light source and a tangent plane of a vertex of the third refractive surface is greater than or equal to 5 mm and less than or equal to 100 mm;

and/or a perpendicular distance c between a vertex of the light source and the flat area is greater than 0 and less than the perpendicular distance b between the vertex of the light source and the tangent plane of the vertex of the third refractive surface;

and/or a perpendicular distance d between the tangent plane of the vertex of the third refractive surface and a tangent plane of the vertex of the first refractive surface is greater than or equal to 0.1a and less than a, a being a perpendicular distance between the vertex of the third refractive surface and the display screen.

The first light transmitting assembly further includes a first connecting surface and a second connecting surface.

The first connecting surface surrounds the third refractive surface, and the second connecting surface surrounds the conical area by one circle; and

a perpendicular distance between the vertex of the third refractive surface and the first connecting surface is greater than a perpendicular distance between the vertex of the third refractive surface and the flat area.

The light are uniformly projected after being refracted by the first light transmitting assembly.

The light are collimated and projected after being refracted by the second light transmitting assembly.

In another aspect, the present invention further provides a 3D printer including: the light source assembly of any one described above; and

a display screen configured to display a pattern having a specific profile.

The light source assembly is arranged on one side of the display screen, and light emitted by the light source assembly are uniformly projected to the display screen and pass through display screen to cure resin.

A perpendicular distance a between a vertex of the first light transmitting assembly and a surface of the display screen on the side opposite to the light source assembly is greater than or equal to $0.2\delta$ and less than or equal to $5\delta$, where $\delta$ is a diameter of a circumcircle of the display screen.

According to the light source assembly and the 3D printer provided in the embodiments of the present invention, the first light transmitting assembly mainly uniformizes the light, and the second light transmitting assembly mainly collimates the light, such that the light projected to the display screen can accurately cure the resin. In the prior art, in order to ensure the degree of collimation of the projected light, a filter device such as a tubular baffle is usually used to filter the large-angle light. This will weaken the light intensity of the projected light and limit the projected area. For example, the projected light from a single light source cannot cover the entire display area, and the degree of uniformity of the projected light cannot be ensured. Compared with the prior art, in the present application document, the first light transmitting assembly changes a propagation angle of the light by refracting the light and adjusts the density of the light, and the uniformized light are refracted by the second light transmitting assembly, to further change the propagation angle of the light, such that the light propagate in the same direction. That is, the light are projected to the display screen after being uniformized and collimated, thereby ensuring uniform curing of the resin and improving the accuracy of curing.

## BRIEF DESCRIPTION OF THE DRAWINGS

FIG. 1 is a structural schematic diagram of a display screen and a light source assembly provided in an embodiment of the present invention;

FIG. 2 is a perspective structural schematic diagram of a second light transmitting assembly provided in an embodiment of the present invention in a first direction;

FIG. 3 is a perspective structural schematic diagram of a second light transmitting assembly provided in an embodiment of the present invention in a second direction;

FIG. 4 is a structural schematic diagram of a second light transmitting assembly provided in an embodiment of the present invention at a first angle of view;

FIG. 5 is a structural schematic diagram of a second light transmitting assembly provided in an embodiment of the present invention at a second angle of view;

FIG. 6 is a structural schematic diagram of a second light transmitting assembly provided in an embodiment of the present invention at a third angle of view;

FIG. 7 is a schematic diagram of parameters of a second light transmitting assembly provided in an embodiment of the present invention;

FIG. 8 is a structural schematic diagram of a first type of first light transmitting assembly and a light emitting assembly provided in an embodiment of the present invention;

FIG. 9 is a structural schematic diagram of a second type of first light transmitting assembly provided in an embodiment of the present invention;

FIG. 10 is a structural schematic diagram of a third type of first light transmitting assembly provided in an embodiment of the present invention;

FIG. 11 is a structural schematic diagram of a fourth type of first light transmitting assembly and a light emitting assembly provided in an embodiment of the present invention; and

FIG. 12 is a parametric schematic diagram of a fourth type of first light transmitting assembly and a light emitting assembly provided in an embodiment of the present invention.

## DETAILED DESCRIPTION OF THE EMBODIMENTS

In order to further illustrate the technical means used to achieve the intended purpose of the present invention and the technical effects of the present invention, specific embodiments, the structure, features and effects of a light source assembly provided according to the present invention are described in detail below in conjunction with the accompanying drawings and preferred embodiments. For convenience of description, light emitted by the light source assembly is described in the form of light.

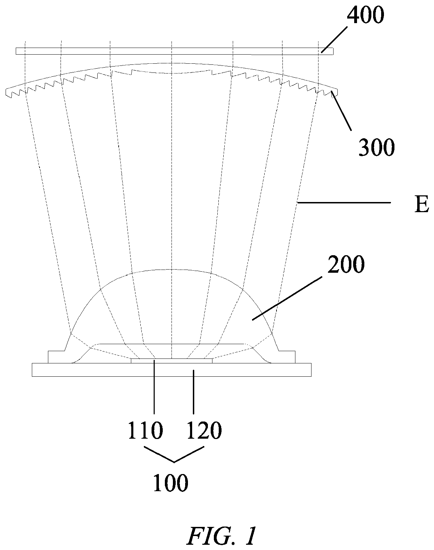

In an aspect, as shown in FIGS. 1 - 3, an embodiment of the present invention provides a light source assembly for use in a three-dimensional (3D) printer. The light source assembly includes:
a light emitting assembly 100, a first light transmitting assembly 200 and a second light transmitting assembly 300.

The light emitting assembly 100 and the second light transmitting assembly 300 are arranged on two opposite sides of the first light transmitting assembly 200 respectively, and an outer profile of the second light transmitting assembly 300 is of a cambered plate-like structure; and
light emitted by the light emitting assembly 100 are projected after being sequentially refracted by the first light transmitting assembly 200 and the second light transmitting assembly 300.

In an embodiment, the 3D printer further includes a base and a resin vat. A display screen 400 is arranged on the base, and the display screen 400 is configured to display an image, such that the light emitted by the light source assembly pass through the display screen 400 in a specific profile to cure resin. The resin vat and the light source assembly are arranged on two opposite sides of the display screen 400 respectively, such that the light may pass through the display screen 400 to cure the resin. For example, the display screen 400 may be arranged at a top end of the base, the resin vat is placed on the display screen 400, the light source assembly is arranged in the base, that is, below the display screen 400, and the light from the light source assembly are projected from bottom to top. Alternatively, the light source assembly is located above the display screen 400, the resin vat is located below the display screen 400, and the light from the light source assembly are projected from top to bottom. In this embodiment, an example in which the light from the light source assembly are projected from bottom to top is described.

The light source assembly includes a light emitting assembly 100. Light emitted by the light emitting assembly 100 are propagated in a form of a light beam, and the light beam has the following properties: the light in the light beam are gradually diffused outwardly in an approximate conical shape with a central light as an axis; the closer the light is closer to an edge of the light beam, the larger an included angle between a propagation angle of the light and the central light; and the density of the light is gradually sparser from the central light to the edge. Without external intervention, the projection of the light beam of the light emitting assembly 100 onto a target surface will present a projected spot that gradually darkens from the center to the outside. The direct use of such a light beam for resin curing will cause slow curing at an edge of a model so that demolding failure is likely to occur, and a too large angle between the edge light and the display screen 400 or a release film also will result in reduced forming accuracy of the model, for example, an enlarged forming area compared with a preset profile. In order to avoid the problems, in this embodiment, the first light transmitting assembly 200 and the second light transmitting assembly 300 are arranged in sequence between the light emitting assembly 100 and the display screen 400, and the first light transmitting assembly 200 refracts the light emitted by the light emitting assembly 100 for the first time. For example, different degrees of refraction are carried out according to the light at different positions in the light beam, such that propagation directions of the light passing through the first light transmitting assembly 200 are changed, the light in a light sparse area gradually get close to each other, densification processing of the light in the sparse area is achieved, and the light can be changed into uniform light after passing through the first light transmitting assembly 200. In some embodiments, the light processed by the first light transmitting assembly 200 are still propagated in the form of a light beam and continue to pass through the second light transmitting assembly 300, and the second light transmitting assembly 300 has a second refraction effect on the light, such that the light are converged, and propagation angles of the light are adjusted to the same direction. That is, the light are collimated.

It can be understood that the functions of the first light transmitting assembly 200 and the second light transmitting assembly 300 are not single, but they need to act synergistically together to uniformize and collimate the light. A light E is described below as an example. The light E is a light located at or close to an edge in the light beam of the light emitting assembly 100 and having a large angle, an included angle between the light E and a central light is large, after the light passes through the first light transmitting assembly 200, an included angle between a propagation direction of the light E and the central light is reduced, and the light E is gradually close to surrounding light to densify the light in an edge area, then the light E is refracted by the second light transmitting assembly 300, and the included angle between the propagation direction of the light E and the central light is further reduced or the propagation direction of the light E is the same as that of the central light, such that the light E is collimated.

Since the light passing through the first light transmitting assembly 200 is still propagated in the form of a light beam, the closer the light is to the edge of the light beam, the larger the included angle between the light and the central light. In order to collimate the light in a more targeted manner, in an embodiment, the second light transmitting assembly 300 is arranged according to the characteristics of the light beam, and the second light transmitting assembly 300 is of an approximate cambered plate-like structure gradually bent in the direction of the first light transmitting assembly 200 from the center to the edge. Compared with a second light transmitting assembly 300 of a flat plate-like structure, the cambered second light transmitting assembly 300 reduces the incident angle of the light close to the edge of the light beam, that is, the closer the light is close to the edge of the light beam, the larger the angle change of the refracted light, so that the light are collimated in a targeted manner according to the characteristics of the light beam, and the degree of collimation of the light is better.

A refractive surface of the second light transmitting assembly 300 is not limited to a smooth cambered surface, but may be a surface having recesses and protrusions arranged according to a certain rule, so as to differently adjust light in different areas to achieve a better light collimation effect. The cambered plate-like structure of the second light-transmitting assembly 300 means that an outer profile of any refractive surface of the second light transmitting assembly 300 is cambered. For example, in an embodiment, a surface of the second light transmitting assembly 300 on the side close to the first light transmitting assembly 200 is in the shape of a relief, and the outer profile of the second light transmitting assembly is a cambered surface which is recessed toward one side of the display screen 400.

Whether the light are uniformly collimated may be determined by detecting projection on a target surface. For example, in some embodiments, a light intensity detector is used to measure light intensities at different positions on the target surface. For example, a plurality of detection points are selected in a radial direction from a central point to a projection edge, and whether the light intensity of each detection point is consistent is determined, so as to determine whether the light are uniform. The position of the target surface relative to the light source assembly is moved to detect whether the projected area is changed, so as to determine whether the light are collimated. A slight difference in light intensity of the detection point and a slight change in projected area may be caused by lens machining errors or an external environment. It can be understood that the light projected to the display screen 400 in the present application are mostly uniform and vertical light, and the utilization rate of the light is greatly increased without extensive loss of light.

According to the light source assembly and the 3D printer provided in the embodiments of the present invention, the first light transmitting assembly mainly uniformizes the light, and the second light transmitting assembly mainly collimates the light, such that the light projected to the display screen can accurately cure the resin. In the prior art, in order to ensure the degree of collimation of the projected light, a filter device such as a tubular baffle is usually used to filter the large-angle light. This will weaken the light intensity of the projected light and limit the projected area. For example, the projected light from a single light source cannot cover the entire display area, and the degree of uniformity of the projected light cannot be ensured. Compared with the prior art, in the present application document, the first light transmitting assembly changes a propagation angle of the light by refracting the light and adjusts the density of the light, and the uniformized light are refracted by the second light transmitting assembly, to further change the propagation angle of the light, such that the light propagate in the same direction. That is, the light are projected to the display screen after being uniformized and collimated, thereby ensuring uniform curing of the resin and improving the accuracy of curing.

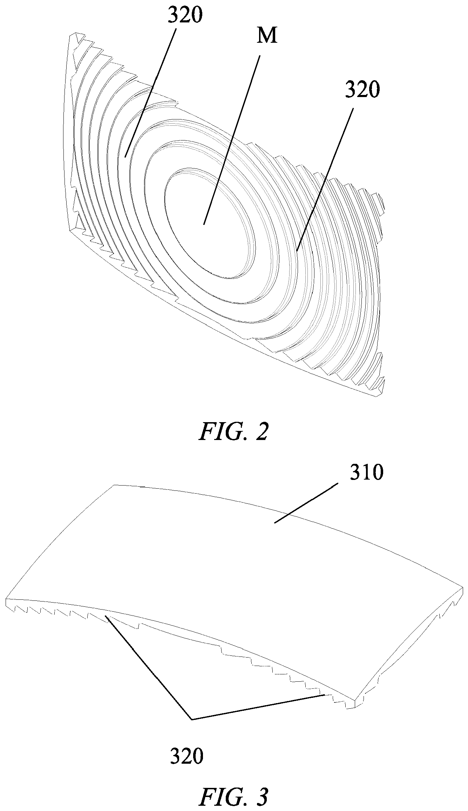

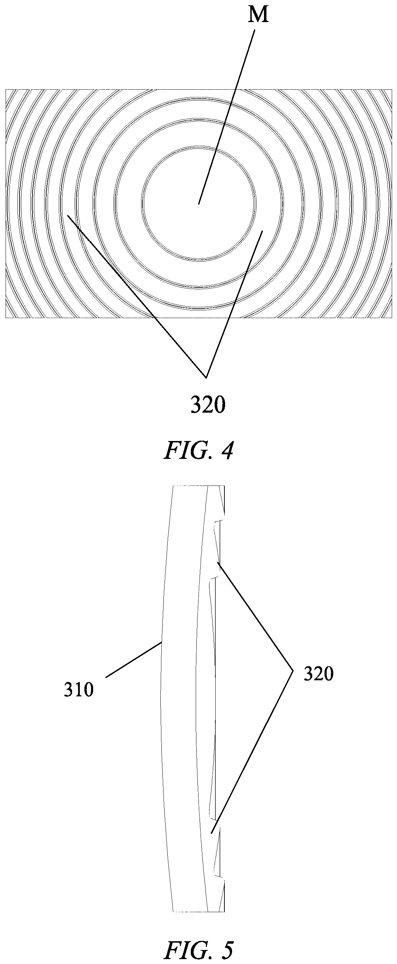

In an embodiment, as shown in FIGS. 2 - 6, the second light transmitting assembly 300 includes a first refractive surface 310. The first refractive surface 310 is located on the side of the second light transmitting assembly 300 opposite to the first light transmitting assembly 200. The side of the second light transmitting assembly 300 opposite to the first refractive surface 310 is provided with a plurality of protrusions 320 arranged in sequence from a central point M to the outside. The protrusions 320 are cambered protrusions or circular-ring-shaped protrusions. The first refractive surface 310 is a convex surface, and an outer profile of the second light transmitting assembly 300 on the side opposite to the first refractive surface 310 is a concave surface.

When the second light transmitting assembly 300 is sufficiently large, all the protrusions 320 may be a plurality of circular-ring-shaped protrusions that are concentrically arranged. The second light transmitting assembly 300 in this embodiment may be obtained by cutting an area, through which no light pass, of the sufficiently large second light transmitting assembly 300, and some of the protrusions 320 remote from the central point M become cambered protrusions, so that the second light transmitting assembly 300 has a small size, does not occupy too much space of the base, and is convenient to mount, and the second light transmitting assembly 300 is also convenient to machine. It can be understood that the cambered protrusion in this embodiment means that the overall shape of the protrusion is approximately cambered, but does not mean that a surface constituting the protrusion is cambered. In an embodiment, an actual in-use orientation of the printer is taken as an example. The projection in a perpendicular downward direction of the second light transmitting assembly 300 is rectangular, the protrusion 320 extends downwardly, light enter the second light transmitting assembly 300 through at least part of an outer wall of the protrusion 320, and projections of the adjacent protrusions 320 in a perpendicular direction do not overlap each other. Parameters such as an angle of the outer wall of the protrusion 320 may be then adjusted, so as to adjust an incident angle of the light, such that the purpose of adjusting an emergent angle of the light in a targeted manner is achieved.

Several specific structures and parameters of the protrusion 320 are listed below for the light source in this embodiment, and it can be understood that a collimation effect of the second light transmitting assembly 300 is not determined by a single parameter, but multiple parameters of the protrusion 320 and the first light transmitting assembly 200 are mutually restricted to produce a better collimation effect together.

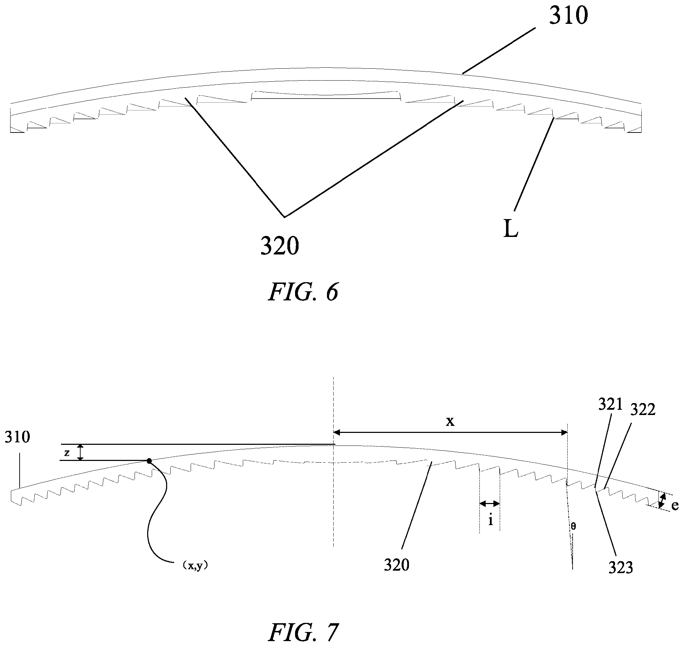

In an embodiment, as shown in FIG. 7, the protrusion 320 is formed by connecting a first cambered wall 321 and a second cambered wall 322. The first cambered wall 321 is closer to the central point M than the second cambered wall 322. A generatrix of the first cambered wall 321 is consistent with an extension direction of an optical axis of the second light transmitting assembly 300.

The first cambered wall 321 may be seen as a line segment rotating about an optical axis. That is, the first cambered wall 321 is a conical surface or a cylindrical surface, and the generatrix of the first cambered wall 321 is the line segment. In other words, the generatrix is a connecting line of two points having the shortest distance on two side edges of the first cambered wall 321.

It can be generally understood that since the outer profile of the second light transmitting assembly 300 on the side close to the first light transmitting assembly 200 is a concave surface, in order to improve light collimation performance of the second light transmitting assembly 300, the generatrix of the first cambered wall 321 is configured to be close to be perpendicular, most or all of the light projected to the second light transmitting assembly 300 enters the second light transmitting assembly 300 through the second cambered wall 322, and the second cambered wall 322 is configured to be a cambered wall that is inclined upwardly in a direction away from the optical axis, such that included angles between the light refracted by the second cambered wall 322 and the central light are reduced. That is, primary collimation is performed by means of the second cambered wall 322, and secondary collimation is performed by means of the first refractive surface 310, such that the light collimation efficiency is higher.

In some other embodiments, as shown in FIG. 7, the first cambered wall 321 may be configured to have an included angle θ between the generatrix and the optical axis of the second light transmitting assembly 300 satisfying the following equation:

$$\theta = A + Bx,$$

where A and B are both preset constants; and
x is a perpendicular distance between any point on the first cambered wall 321 and the optical axis of the second light transmitting assembly 300, or x is a perpendicular distance between a top edge L of the protrusions 320 and the optical axis of the second light transmitting assembly 300.

The top edge L is a curve composed of points on the protrusion 320 farthest from the first refractive surface 310.

There is an included angle between the generatrix of the first cambered wall 321 and the optical axis, such that the first cambered wall 321 is convenient to machine, it is ensured that perpendicular projections of the adjacent protrusions 320 do not overlap each other, and the problem is avoided that due to mechanical errors, the protrusions 320 overlap each other, resulting in that refraction errors are caused, and the projections have annular dark areas. Specific values of A and B are set according to machining requirements, and the values of A and B should be as small as possible on the basis of satisfying machining requirements, so as to ensure effective collimation of the light.

Since most of the light enter the second light transmitting assembly 300 through the second cambered wall 322, a surface form of the second cambered wall 322 plays a decisive role in collimating the light, and collimation may be adjusted by adjusting the surface form of the second cambered wall 322. For example, in an embodiment, the second cambered wall 322 is a spherical surface or an aspherical surface. Specifically, the second cambered wall may be a spherical surface or an aspherical surface that is gradually bent upwardly in a direction away from the optical axis, such that refraction intensities of the light are gradually enhanced in the direction away from the optical axis on any second cambered wall 322, and the closer the light is to the edge of the light beam, the higher refraction intensity is obtained, such that more accurate collimation is achieved. The second cambered wall 322 may be a spherical surface, such that the second cambered wall 322 has a simple structure and is convenient to machine. Alternatively, the second cambered wall 322 is an aspherical surface. The aspherical surface refers to a cambered surface having different curvatures continuously changing from a vertex to an edge of the aspherical surface. The specific surface form of the aspherical surface may be adjusted by adjusting a coefficient of the aspherical surface, such that the refraction intensities of the light are adjusted in a targeted manner on the second cambered wall 322. It can be understood that surface forms of the second cambered walls 322 of different protrusions 320 may be different. For example, the surface form is adjusted to increase the refraction intensity of the light close to the edge of the light beam, such that the change of the angle of propagation of the light is larger, thereby achieving collimation.

Among the parameters of the aspherical surface, the radius of curvature is used for describing the degree of curvature of a curved surface. It can be generally understood that the larger the radius of curvature is, the less the degree of curvature of the curved surface is, and the radius of curvature of the aspherical surface is a main parameter for determining imaging of an aspherical optical system and influences basic properties of the aspherical surface, such as a focal length of the aspherical surface. The radius of curvature of the aspherical surface is adjusted such that the aspherical surface can achieve the optimal optical effect. In an embodiment, the radius of curvature of the second cambered wall 322 is greater than or equal to 0.18, such that the uniformity of the light is prevented from being influenced by excessive difference of refraction degrees of the light at different positions on the second cambered wall 322, and sufficient projected area is ensured after the light are collimated. Moreover, the protrusions 320 are prevented from being arranged too densely, and machining is facilitated. The radius of curvature of the second cambered wall 322 is less than or equal to $30\delta$, thereby ensuring effective collimation. $\delta$ is a display outer diameter of the display screen 400. In some embodiments, the display screen 400 has a rectangular display area, and a diameter of a circumcircle of the display area of the display screen 400 may be taken as the display outer diameter of the display screen 400. The radius of curvature of the second cambered wall 322 may be $1\delta$, $6\delta$, $10\delta$, $13\delta$, $18\delta$, $21\delta$ or $27\delta$.

In an embodiment, the top edge L of the protrusion 320 is formed at a connecting position between the first cambered wall 321 and the second cambered wall 322. The top edge L is cambered, such that machining is facilitated, and the situation is avoided that machining errors occur in the connecting position between the first cambered wall 321 and the second cambered wall 322, for example, barbs are formed, such that light cannot enter the second light transmitting assembly 300 near the connecting position, resulting in the loss of light and the creation of a dark area. In some other embodiments, the protrusion 320 is delimited by a first cambered wall 321, a second cambered wall 322 and a connecting surface 323. The first cambered wall 321 and the second cambered wall 322 are connected to two sides of the connecting surface 323 respectively, a top edge L is composed of the point of the connecting surface 323 farthest from the first refractive surface 310, and the connecting surface 323 is a cambered surface or a spherical surface, such that the connecting position of the first cambered wall 321 and the second cambered wall 322 is in smooth transition. For example, spherical surface transition may be used for the connecting position, the spherical surface has a radius greater than or equal to 0.1 mm and less than or equal to 10 mm. For example, the radius is 3 mm, 5 mm or 8 mm to ensure machining accuracy.

In an embodiment, a minimum perpendicular distance e between the top edge L of the protrusion 320 and a tangent plane of the first refractive surface 310 is greater than or equal to 0.5 mm and less than or equal to 50 mm, e.g., 1 mm, 8 mm, 15 mm, 20 mm, 35 mm, 45 mm, 50 mm. It can be generally understood that the second light transmitting assembly 300 has a thickness greater than or equal to 0.5 mm, such that the first cambered wall 321 and the second cambered wall 322 have a sufficient extension space in the thickness of the second light transmitting assembly 300, and a surface form of the second cambered wall 322 may be flexibly adjusted. The second light transmitting assembly 300 has a thickness less than or equal to 50 mm, such that the second light transmitting assembly 300 is prevented from occupying too much space of the base, propagation distances of the light in the second light transmitting assembly 300 are shortened, and the loss of light in the second light transmitting assembly 300 is avoided.

The protrusions 320 may be a plurality of protrusions 320 uniformly distributed in a direction away from the central point M. That is, distances between the top edges L of adjacent protrusions 320 are the same, thereby facilitating machining. Alternatively, the protrusions 320 may be a plurality of protrusions 320 that are arranged denser in a direction away from the central point M. That is, distances between the top edges L of adjacent protrusions 320 are gradually reduced in the direction away from the central point M. For example, in an embodiment, in order to ensure effective collimation of the light close the edge of the light beam, the radius of curvature of the second cambered wall 322 is gradually increased in the direction away from the central point M. That is, the degree of curvature of the second cambered wall 322 is gradually increased, and an extension amount of the second cambered wall 322 in a thickness direction of the second light transmitting assembly 300 may be reduced by increasing the density of the protrusions 320, such that the collimation effect is ensured without increasing the thickness of the second light transmitting assembly 300.

In some embodiments, distances i between the top edges L of adjacent protrusions 320 are greater than or equal to 0.5 mm, thereby avoiding machining difficulty and large errors of the dense protrusions 320. The distances i between the top edges L of adjacent protrusions 320 are less than or equal to 50 mm, such that it is ensured that the number of protrusions 320 may be adjusted in a targeted manner according to the angles of the light in different areas of the light beam. For example, the radii of curvature of the second cambered walls 322 of different protrusions 320 are adjusted such that the closer a light spot is to the edge, the larger an angle adjustment is obtained, and the collimation of the light is more accurate. The distance i may specifically be 0.7 mm, 1 mm, 10 mm, 30 mm, or 45 mm.

In an embodiment, the side of the second light transmitting assembly 300 opposite to the first refractive surface 310 is further provided with a central convex surface, the protrusion 320 closest to the central point M is a central protrusion, the central protrusion is a circular-ring-shaped protrusion, and the central protrusion surrounds the central convex surface by one circle.

The central point M of the second light transmitting assembly 300 is located on the optical axis of the second light transmitting assembly 300. Since included angles between some of the light close to the central light in the light beam and the central light are small, no protrusion 320 needs to be provided for targeted refraction angle adjustment, and an excellent collimation effect can be achieved only by providing a protruding cambered surface, thereby reducing the machining amount of the protrusion 320, and ensuring the mechanical strength of the second light transmitting assembly 300.

The aspherical surface refers to a cambered surface having different curvatures continuously changing from the vertex to the edge of the aspherical surface, the surface form of the aspherical surface may be represented by a high-order polynomial containing a coefficient of the aspherical surface, and the aspherical surface may be specifically of a rotationally symmetric structure. In some embodiments, the surface form of the aspherical surface is represented by a polynomial as follows:

$$z = \frac{c_x x^2 + c_y y^2}{1 + \sqrt{1 - (1+k_x)c_x^2 x^2 - (1+k_y)c_y^2 y^2}} + \sum_{n=2}^{10} A_{2n}\left[(1-B_{2n})x^2 + (1+B_{2n})y^2\right]^n$$

where z is a vector height of a point (x, y) on the aspherical surface, and is a distance of the point (x, y) shown in FIG.

$$c_x = \frac{1}{R_x}, \quad c_y = \frac{1}{R_y}$$

7 in the vertical direction relative to the central point M, $c_x$ is a curvature of a vertex of the aspherical surface in an x direction, $R_x$ is a radius of curvature of the vertex of the aspherical surface in the x direction, $c_y$ is a curvature of the vertex of the aspherical surface in a y direction, $R_y$ is a radius of curvature of the vertex of the aspherical surface in the y direction, $k_x$ is a coefficient of the aspherical surface in the x direction, $k_y$ is a coefficient of the aspherical surface in the y direction, $A_{2n}$ and $B_{2n}$ are both high-order coefficients of the aspherical surface or correction coefficients of the aspherical surface, absolute value ranges of $A_{2n}$ and $B_{2n}$ are $0 \le A_{2n} < 1$ and $0 \le B_{2n} < 1$, n is a positive integer greater than 1, such as n = 2, 3, 4,..., and the accurate values of specific parameters are adjusted according to corresponding scenes, which will not be described in details.

The surface form of the aspherical surface may be adjusted by adjusting the radius of curvature of the aspherical surface. The radius of curvature is used for describing the degree of curvature of the curved surface. It can be generally understood that the larger the radius of curvature is, the less the degree of curvature of the curved surface is, and the radius of curvature influences basic properties of the aspherical surface, such as a focal length of the aspherical surface. The radius of curvature of the aspherical surface is adjusted such that the aspherical surface can achieve the optimal optical effect.

In an embodiment, the first refractive surface 310 may be a spherical surface or an aspherical surface described above, such that the surface form of the first refractive surface 310 can be flexibly adjusted according to the size of the display area of the display screen 400 and the propagation angles of the light. The first refractive surface 310 has a radius of curvature greater than or equal to 0.1δ and less than or equal to 506, such as 0.16, 1δ, 20δ, 35δ and 50δ. Thus, a focal point of the first refractive surface 310 is not too far from or too close to the first refractive surface 310, such that an equivalent light emitting point of the light projected to the first refractive surface 310 is close to the focal point, distances between the first light transmitting assembly 200 and the second light transmitting assembly 300 and between the light emitting assembly 100 and the second light transmitting assembly are appropriate, and the projected area of the light refracted by the second light transmitting assembly 300 can be equivalent to the display area of the display screen, and will not cause the loss of light when the projected area is too large, or result in that the resin cannot be completely cured when the projected area is too small.

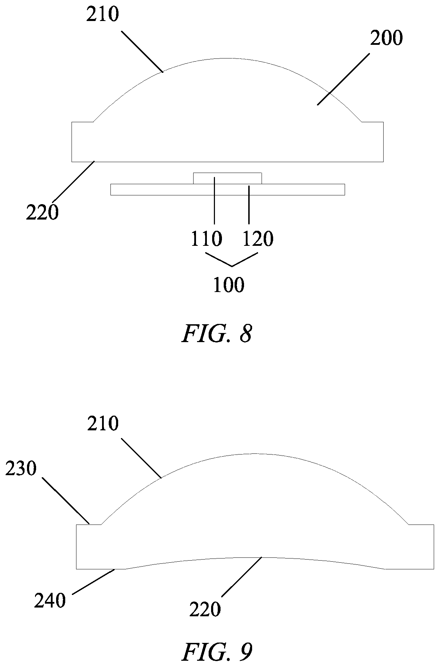

The light are uniformized by the first light transmitting assembly 200 and are projected to the second light transmitting assembly 300, the parameters of the first light transmitting assembly 200 have a direct influence on the collimation effect of the second light transmitting assembly 300, and it can be understood that the structure and the parameters of the second light transmitting assembly 300 are selected on the basis of characteristics of the uniform light generated by the first light transmitting assembly 200. As shown in FIGS. 8 - 11, the first light transmitting assembly 200 includes a third refractive surface 210 and a fourth refractive surface 220 that are opposite to each other. The third refractive surface 210 is a convex surface, and the light emitting assembly 100 is arranged corresponding to the fourth refractive surface 220.

The light are refracted by the first light transmitting assembly 200 to form a uniform light beam having a smaller divergence angle, and then the uniform light beam is projected to the second light transmitting assembly 300, to form collimated light. The third refractive surface 210 is an aspherical surface, the surface form of the aspherical surface still follows the above equation of the aspherical surface, and the angles of the light may be adjusted by adjusting the surface form of the third refractive surface 210, such as by adjusting the radius of curvature of the third refractive surface 210.

The light are refracted twice by the third refractive surface 210 and the fourth refractive surface 220 of the first light transmitting assembly 200, and the emergent light are uniform by means of the superposition of the two refraction effects. The fourth refractive surface 220 may be of various surface forms. For example, the fourth refractive surface 220 is a flat surface, and the first light transmitting assembly 200 is a plano-concave lens, such that machining is facilitated. Alternatively, the fourth refractive surface 220 is one of a convex surface and a concave surface, and may be selected according to the arrangement position of the light emitting assembly 100, the type of a light source 110, etc. In an embodiment, the light beam emitted by the light source 110 has a large divergence angle, and the light close to the edge of the light beam has a large incident angle on the fourth refractive surface 220, such that the fourth refractive surface 220 may be adjusted to be the convex surface in order to increase angle adjustment intensity of the edge light and give consideration to machining difficulty of the lens, so as to increase the angle change of the light after being refracted by the fourth refractive surface 220, and enhance the convergence effect of the edge light.

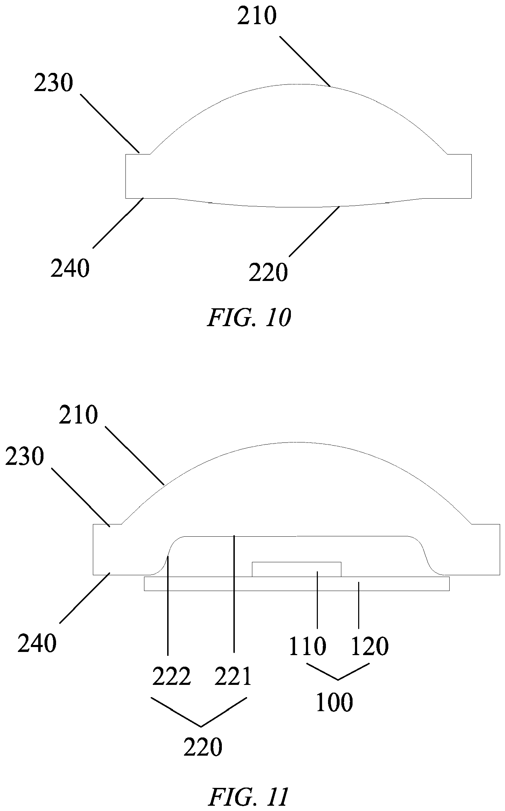

In an embodiment, as shown in FIG. 11, the fourth refractive surface 220 includes a flat area 221 and a conical area 222. The conical area 222 surrounds the flat area 221 by one circle. The light emitting assembly 100 includes a light source 110 and a substrate 120. An accommodating space is delimited by the substrate 120, the flat area 221 and the conical area 222, and the light source 110 is arranged on the substrate 120 and located in the accommodating space. The light emitted by the light emitting assembly 100 enter the first light transmitting assembly 200 through the flat area 221 and the conical area 222.

Since the light source 110 is located in the accommodating space, the light from the light source 110 are prevented from influencing the display screen 400, and the light beam of the light source 110 is not likely to be influenced by an external environment. Compared with the flat area 221, the conical area 222 has a better convergence effect on the light, the light of the light beam close to the edge enters the first light transmitting assembly 200 through the conical area 222, the angle change is larger, and the convergence effect is more significant, so that the degree of uniformity of the light are better.

A relative position relationship of the first light transmitting assembly 200 and the light source 110 directly influences the projected area of the light beam and the density of the light, and several specific forms of the light source 110 and the parameters of the light source 110 and the first light transmitting assembly 200 are taken as an example below.

The light source 110 is a point light source and has a single light emitting point, a central light emitted by the point light source, the optical axis of the first light transmitting assembly 200 and the optical axis of the second light transmitting assembly 300 coincide with one other, or the perpendicular distance between the point light source and at least one of the optical axis of the first light transmitting assembly 200 and the optical axis of the second light transmitting assembly 300 is less than 10 mm. Alternatively, the light source 110 is an area light source including a plurality of light emitting chips. A distance between adjacent edges of two adjacent light emitting chips is less than or equal to a threshold such as 3 mm. The light source 110 may specifically be a chip on board (COB) light source, an integrated light source, a laser light source, a mercury lamp, etc. The central light emitting chip of the area light source is located on the optical axis of the first light transmitting assembly 200 and the optical axis of the second light transmitting assembly 300.

Alternatively, the perpendicular distance between the central light emitting chip and at least one of the optical axis of the first light transmitting assembly 200 and the optical axis of the second light transmitting assembly 300 is less than 10 mm.

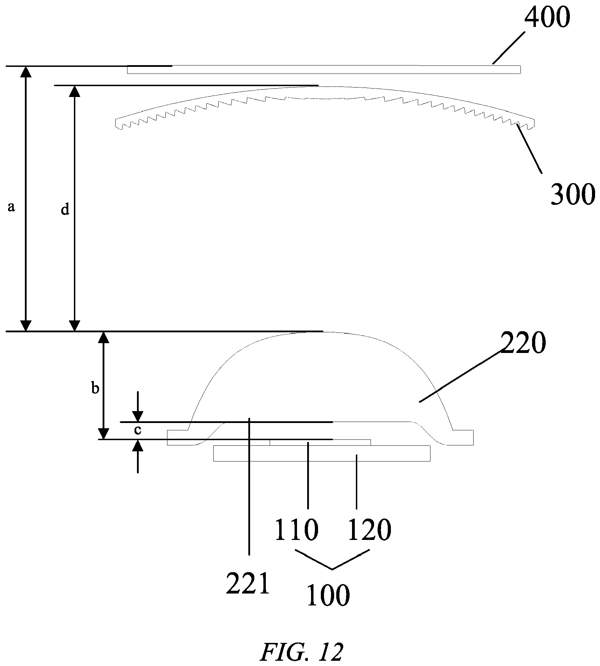

In an embodiment, as shown in FIG. 12, a vertex of the light source 110 is a vertex of the point light source or a top surface of the area light source, and a perpendicular distance b between the vertex of the light source 110 and a tangent plane of a vertex of the third refractive surface 210 is greater than or equal to 5 mm, such that a sufficient distance exists between the vertex of the light source 110 and the fourth refractive surface 220, and the light beam is fully diffused before entering the first light transmitting assembly 200, thereby ensuring the projected area on the display screen 400. The perpendicular distance b between the vertex of the light source 110 and the tangent plane of the vertex of the third refractive surface 210 is less than or equal to 100 mm, such that the first light transmitting assembly 200 is prevented from occupying too much space of the base, and the problem of loss of light caused by too thick first light transmitting assembly 200 is avoided.

In an embodiment, a perpendicular distance c between a vertex of the light source 110 and the flat area 221 is greater than 0 and less than the perpendicular distance b between the vertex of the light source 110 and the tangent plane of the vertex of the third refractive surface 210. It is ensured that a certain distance is kept between the light source 110 and the flat area 221, such that the light can be effectively diffused, and it is ensured that the third refractive surface 210 has a certain degree of curvature, such that light can be effectively converged.

In an embodiment, a perpendicular distance d between the tangent plane of the vertex of the third refractive surface 210 and the tangent plane of the vertex of the first refractive surface 310 is greater than or equal to 0.1a and less than or equal to a, such as 0.2a, 0.3a, 0.4a, 0.5a, 0.6a, 0.7a, 0.8a and 0.9a, such that the third refractive surface 210 is not too close to the second refractive surface 320, thereby avoiding mutual influence of the light at two refractive surfaces. After the light pass through the first light transmitting assembly 200, the propagation angles are changed. For example, the edge light gradually gets close to the central light in a propagation process, so as to enable the structure of the second light transmitting assembly 300 to be as simple as possible. In order to facilitate design and machining, the second light transmitting assembly 300 should be close to the display screen 400 as much as possible, such that the light projected to the second light transmitting assembly 300 are nearly uniform, and the second light transmitting assembly 300 should not be too close to the display screen 400, such that the display screen 400 is prevented from being influenced by the light in the second light transmitting assembly 300. In an embodiment, the perpendicular distance d between the tangent plane of the vertex of the third refractive surface 210 and the tangent plane of the vertex of the first refractive surface 310 is 0.9a, a being the perpendicular distance between the vertex of the third refractive surface 210 and the display screen 400.

In some embodiments, as shown in FIGS. 9 - 11, the first light transmitting assembly 200 further includes a first connecting surface 230 and a second connecting surface 240. The first connecting surface 230 surrounds the third refractive surface 210, and the second connecting surface 240 surrounds the conical area 222 by one circle. A perpendicular distance between the vertex of the third refractive surface 210 and the first connecting surface 230 is greater than a perpendicular distance between the vertex of the third refractive surface 210 and the flat area 221.

An annular connecting shoulder is formed in the front of the first connecting surface 230 and the second connecting surface 240 and is configured to fix the first light transmitting assembly 200. For example, an external pressing device is used to abut against the first connecting surface 230, so as to fix the first light transmitting assembly 200. The first connecting surface 230 further has the effect of blocking large-angle light, such that when the light enter the first light transmitting assembly 200 and are projected to the first connecting surface 230, the light are absorbed or blocked, thereby avoiding influence of stray light on uniformity and collimation of the projected light beam. The perpendicular distance between the vertex of the third refractive surface 210 and the first connecting surface 230 is set to be greater than the perpendicular distance between the vertex of the third refractive surface 210 and the flat area 221, such that most of the light can still pass through the first light transmitting assembly 200 to become refracted light, without weakening the light intensity. It is ensured that sufficient light may enter the first light transmitting assembly 200 through the conical area 222 and be emitted out through the third refractive surface 210, to obtain a sufficient convergence effect, so as to form uniform light having sufficient intensity and area.

In another aspect, the present invention further provides a 3D printer including: the light source assembly of any one described above; and

a display screen 400, the display screen 400 being configured to display a pattern having a specific profile.
the light source assembly is arranged on one side of the display screen 400, and light emitted by the light source assembly are uniformly projected to the display screen 400 and pass through display screen 400 to cure resin.

The 3D printer further includes a base, a lifting assembly, a printing platform and a resin vat. The resin vat is configured to contain the resin and is placed on the display screen 400, the light source assembly is located in a box body of the base, and the lifting assembly is connected to the base and the printing platform. 400 is connected to a master controller of the 3D printer, the master controller analyzes printing data and divides the printing data into patterns one by one, each pattern may correspond to a shape of each layer of a printing model, the master controller transmits the patterns to 400, projected light from the light source assembly is projected to 400, and 400 enables the projected light having a specific profile to pass and be projected to the resin according to the patterns, such that the resin is cured to form a layer of model having the same pattern shape. The printing platform drives the model to move upward or downward, such that the model is separated from the resin vat, and the above process is repeated to print the model layer by layer.

In an embodiment, as shown in FIG. 12, a perpendicular distance a between a vertex of the first light transmitting assembly 200 and a surface of the display screen 400 on the side opposite to the light source assembly is greater than or equal to $0.2\delta$ and less than or equal to $5\delta$, where $\delta$ is a diameter of a circumcircle of the display screen 400. In a propagation process of the light after passing through the first light transmitting assembly 200, the degree of uniformity of the light is changed, an ideal degree of uniformity is presented within a certain range, and in order to give consideration to machining difficulty of the first light transmitting assembly 200 and the size of the light source assembly, the distance a is set to be greater than or equal to $0.2\delta$ and less than or equal to $5\delta$, such as $0.6\delta$, $2\delta$, $4\delta$ and $5\delta$. The light on the display screen 400 are uniform and can cover the entire display area. Moreover, thicknesses of the first light transmitting assembly 200 and the second light transmitting assembly 200 are appropriate, and distances between the light emitting assembly 100, the first light transmitting assembly 200, the second light transmitting assembly 200 and the display screen 400 are appropriate, such that excessive space is not occupied while an excellent projection effect is achieved.

It can be understood that the above-listed parameter values do not exist separately, but are mutually restricted and jointly adjust the degree of uniformity and the degree of collimation of the light. In an optical system designed in the present application, all details are obtained through optimization and adjustment, the light source assembly is a complex and organic optical system, uniformization and collimation functions are obtained through mutual restriction of the plurality of parameters, and the range of a parameters is not obtained by testing the single parameter, but by cross-testing the value ranges of the plurality of parameters. For example, according to the parameters of the first light transmitting assembly 200, the process of determining the parameters of the second light transmitting assembly 300 may include: carrying out experiments on a plurality of protrusion 320 structures, to select an experiment result having the best projection effect, comprehensively analyzing the experiment result to obtain value ranges of the parameters, changing the values of the parameters of the first light transmitting assembly 200, and repeatedly carrying out the experiments on the plurality of protrusion 320 structures, to obtain parameters of the second light transmitting assembly 300 having a certain universality for some first light transmitting assemblies 200. For example, in a group of parameters, specific values of other parameters are determined. For example, a minimum perpendicular distance e between the top edge L of the protrusion 320 and a tangent plane of a first refractive surface 310 is 30 mm, a perpendicular distance b between a vertex of the light source 110 and a tangent plane of a vertex of a third refractive surface 210 is 60 mm, and only a distance i between top edges L of the adjacent protrusions 320 is adjusted to determine whether projection brightness is uniform or whether projected light are collimated by axial moving a target surface along the projected light, so as to obtain a first range of the distance i. Specific values of other parameters are changed. For example, the minimum perpendicular distance e between the top edge L of the protrusion 320 and the tangent plane of the first refractive surface 310 is 40 mm, the perpendicular distance b between the vertex of the light source 110 and the tangent plane of the vertex of the third refractive surface 210 is 30 mm, and the distance i between the top edges L of the adjacent protrusions 320 is adjusted to determine whether projection brightness is uniform or whether projected light are collimated by axially moving a target surface along the projected light, so as to obtain a second range of the distance i. Thus, multiple combinations of experiments are carried out repeatedly to obtain a plurality of groups of ranges of the distance i, and an intersection of the ranges is a universal value range of the distance i.

In an aspect, embodiments of the present invention provide:

Embodiment 1. A light source assembly for use in a 3D printer, the light source assembly including:

a light emitting assembly 100, a first light transmitting assembly 200 and a second light transmitting assembly 300, where
the light emitting assembly 100 and the second light transmitting assembly 300 are arranged on two opposite sides of the first light transmitting assembly 200 respectively, and an outer profile of the second light transmitting assembly 300 is of a cambered plate-like structure; and
light emitted by the light emitting assembly 100 are projected after being sequentially refracted by the first light transmitting assembly 200 and the second light transmitting assembly 300.

Embodiment 2. The light source assembly according to Embodiment 1, where the second light transmitting assembly 300 includes a first refractive surface 310, the first refractive surface 310 being located on the side of the second light transmitting assembly 300 opposite to the first light transmitting assembly 200;

the side of the second light transmitting assembly 300 opposite to the first refractive surface 310 is provided with a plurality of protrusions 320 arranged in sequence from a central point M to the outside, the protrusions 320 being cambered protrusions or circular-ring-shaped protrusions; and
the first refractive surface 310 is a convex surface.

Embodiment 3. The light source assembly according to Embodiment 1, where the plurality of protrusions 320 are concentrically arranged with the central point M as a circle center.

Embodiment 4. The light source assembly according to Embodiment 2, where a minimum perpendicular distance e between a top edge L of the protrusions 320 and a tangent plane of the first refractive surface 310 is greater than or equal to 0.5 mm and less than or equal to 50 mm.

Embodiment 5. The light source assembly according to Embodiment 2, where distances between top edges L of adjacent protrusions 320 are the same;

or distances between top edges L of adjacent protrusions 320 are gradually reduced in a direction away from the central point M;
or distances i between top edges L of the adjacent protrusions 320 are greater than or equal to 0.5 mm and less than or equal to 50 mm.

Embodiment 6. The light source assembly according to Embodiment 2, where the protrusion 320 is formed by connecting a first cambered wall 321 and a second cambered wall 322, the first cambered wall 321 being closer to the central point M than the second cambered wall 322;

a generatrix of the first cambered wall 321 is consistent with an extension direction of an optical axis of the second light transmitting assembly 300;
or an included angle θ between a generatrix of the first cambered wall 321 and an optical axis of the second light transmitting assembly 300 satisfies the following equation:

$$\theta = A + Bx,$$

where A and B are both preset constants; and
x is a perpendicular distance between any point on the first cambered wall 321 and the optical axis of the second light transmitting assembly 300, or x is a perpendicular distance between a top edge L of the protrusions 320 and the optical axis of the second light transmitting assembly 300.

Embodiment 7. The light source assembly according to Embodiment 2, where the protrusion 320 is formed by connecting a first cambered wall 321 and a second cambered wall 322, the first cambered wall 321 being closer to the central point M than the second cambered wall 322;

the second cambered wall 322 is a spherical surface;
or the second cambered wall 322 is an aspherical surface;
or the second cambered wall 322 has a radius of curvature greater than or equal to $0.1\delta$ and less than or equal to $30\delta$, where $\delta$ a diameter of a circumcircle of a display screen 400.

Embodiment 8. The light source assembly according to Embodiment 2, where the protrusion 320 is delimited by a first cambered wall 321, a second cambered wall 322 and a connecting surface, where the first cambered wall 321 and the second cambered wall 322 are connected to two sides of the connecting surface respectively, and a top edge L is composed of points on the connecting surface farthest away from the first refractive surface 310;

the connecting surface is a cambered surface;
or the connecting surface is a spherical surface;
and/or the connecting surface has a radius greater than or equal to 0.1 mm and less than or equal to 10 mm.

Embodiment 9. The light source assembly according to Embodiment 2, where the side of the second light transmitting assembly 300 opposite to the first refractive surface 310 is further provided with a central convex surface, the protrusion 320 closest to the central point M is a central protrusion, the central protrusion is a circular-ring-shaped protrusion, and the central protrusion surrounds the central convex surface by one circle.

Embodiment 10. The light source assembly according to Embodiment 2, where the first refractive surface 310 is a spherical surface;

or the first refractive surface 310 is an aspherical surface;
and/or the first refractive surface 310 has a radius of curvature greater than or equal to $0.1\delta$ and less than or equal to $50\delta$, where $\delta$ is a diameter of a circumcircle of a display screen 400.

Embodiment 11. The light source assembly according to Embodiment 1, where the first light transmitting assembly 200 includes a third refractive surface 210 and a fourth refractive surface 220 that are opposite to each other, where the third refractive surface 210 is a convex surface, and the light emitting assembly 100 is arranged corresponding to the fourth refractive surface 220.

Embodiment 12. The light source assembly according to Embodiment 11, where the third refractive surface 210 is an aspherical surface; and

the second light transmitting assembly 300 includes a first refractive surface 310, the first refractive surface 310 being located on the side of the second light transmitting assembly 300 opposite to the first light transmitting assembly 200, and the first refractive surface 310 being an aspherical surface.

Embodiment 13. The light source assembly according to Embodiment 12, where the aspherical surface satisfies the following equation:

$$z = \frac{c_x x^2 + c_y y^2}{1 + \sqrt{1 - (1+k_x)c_x^2 x^2 - (1+k_y)c_y^2 y^2}} + \sum_{n=2}^{10} A_{2n}\left[(1-B_{2n})x^2 + (1+B_{2n})y^2\right]^n$$

$$c_x = \frac{1}{R_x}, \quad c_y = \frac{1}{R_y}$$

where z is a vector height of a point (x, y) on the aspherical surface, $c_x$ is a curvature of a vertex of the aspherical surface in an x direction, $R_x$ is a radius of curvature of the vertex of the aspherical surface in the x direction, $c_y$ is a curvature of the vertex of the aspherical surface in a y direction, $R_y$ is a radius of curvature of the vertex of the aspherical surface in the y direction, $k_x$ is a coefficient of the aspherical surface in the x direction, $k_y$ is a coefficient of the aspherical surface in the y direction, $A_{2n}$ and $B_{2n}$ are both high-order coefficients of the aspherical surface or correction coefficients of the aspherical surface, and n is a positive integer greater than or equal to 1.

Embodiment 14. The light source assembly according to Embodiment 11, where the fourth refractive surface 220 is one of a flat surface, a convex surface and a concave surface.

Embodiment 15. The light source assembly according to Embodiment 14, where the fourth refractive surface 220 includes a flat area 221 and a conical area 222, where

the conical area 222 surrounds the flat area 221 by one circle;
the light emitting assembly 100 includes a light source 110 and a substrate 120, an accommodating space being delimited by the substrate 120, the flat area 221 and the conical area 222, and the light source 110 being arranged on the substrate 120 and located in the accommodating space; and
the light emitted by the light emitting assembly 100 enter the first light transmitting assembly 200 through the flat area 221 and the conical area 222.

Embodiment 16. The light source assembly according to Embodiment 15, where the light source 110 is a point light source;
or the light source 110 is an area light source including a plurality of light emitting chips, a distance between two adjacent light emitting chips being less than or equal to a threshold.

Embodiment 17. The light source assembly according to Embodiment 15, where a perpendicular distance b between a vertex of the light source 110 and a tangent plane of a vertex of the third refractive surface 210 is greater than or equal to 5 mm and less than or equal to 100 mm;

and/or a perpendicular distance c between a vertex of the light source 110 and the flat area 221 is greater than 0 and less than the perpendicular distance b between the vertex of the light source 110 and the tangent plane of the vertex of the third refractive surface 210;

and/or a perpendicular distance d between the tangent plane of the vertex of the third refractive surface 210 and a tangent plane of the vertex of the first refractive surface 310 is greater than or equal to 0.1a and less than a, a being a perpendicular distance between the vertex of the third refractive surface 210 and the display screen 400.

Embodiment 18. The light source assembly according to Embodiment 15, where the first light transmitting assembly 200 further includes a first connecting surface 230 and a second connecting surface 240, where

the first connecting surface 230 surrounds the third refractive surface 210, and the second connecting surface 240 surrounds the conical area 222 by one circle; and

a perpendicular distance between the vertex of the third refractive surface 210 and the first connecting surface 230 is greater than a perpendicular distance between the vertex of the third refractive surface 210 and the flat area 221.

Embodiment 19. The light source assembly according to Embodiment 1, where the light are uniformly projected after being refracted by the first light transmitting assembly 200.

Embodiment 20. The light source assembly according to Embodiment 1, where the light are collimated and projected after being refracted by the second light transmitting assembly 300.

In another aspect, the present invention further provides:

Embodiment 21. A 3D printer, including: a light source assembly of any one of Embodiments 1 - 20; and

a display screen 400, the display screen 400 being configured to display a pattern having a specific profile, where the light source assembly is arranged on one side of the display screen 400, and light emitted by the light source assembly are uniformly projected to the display screen 400 and pass through display screen 400 to cure resin.

Embodiment 22. The 3D printer according to Embodiment 21, where a perpendicular distance a between a vertex of a first light transmitting assembly 200 and a surface of the display screen 400 on the side opposite to the light source assembly is greater than or equal to $0.2\delta$ and less than or equal to $5\delta$, where $\delta$ is a diameter of a circumcircle of the display screen 400.

The foregoing description merely relates to the specific embodiments of the present invention, but the scope of protection of the present invention is not limited thereto. Any changes or replacements that can be easily conceived by those skilled in the art within the technical scope disclosed by the present invention shall fall within the scope of protection of the present invention. Therefore, the scope of protection of the present invention shall be subject to the scope of protection of the claims.

**Claims**

1.  A light source assembly applied in a three-dimensional (3D) printer, comprising:

a light emitting assembly, a first light transmitting assembly and a second light transmitting assembly, wherein the light emitting assembly and the second light transmitting assembly are arranged on two opposite sides of the first light transmitting assembly respectively, and an outer profile of the second light transmitting assembly is of a cambered plate-like structure; and

light emitted by the light emitting assembly are projected after being sequentially refracted by the first light transmitting assembly and the second light transmitting assembly.

2.  The light source assembly according to claim 1, wherein

the second light transmitting assembly comprises a first refractive surface, the first refractive surface is located on a side of the second light transmitting assembly opposite to the first light transmitting assembly;

a side of the second light transmitting assembly opposite to the first refractive surface is provided with a plurality of protrusions arranged in sequence from a central point M to the outside, the protrusions are cambered protrusions or circular-ring-shaped protrusions; and

the first refractive surface is a convex surface.

3. The light source assembly according to claim 1, wherein
the plurality of protrusions are concentrically arranged with the central point M as a circle center.

4. The light source assembly according to claim 2, wherein
a minimum perpendicular distance e between a top edge L of the protrusions and a tangent plane of the first refractive surface is greater than or equal to 0.5 mm and less than or equal to 50 mm.

5. The light source assembly according to claim 2, wherein

distances between top edges L of adjacent protrusions are the same;
or distances between top edges L of adjacent protrusions are gradually reduced in a direction away from the central point M;
or distances i between top edges L of adjacent protrusions are greater than or equal to 0.5 mm and less than or equal to 50 mm.

6. The light source assembly according to claim 2, wherein

the protrusion is formed by connecting a first cambered wall and a second cambered wall, the first cambered wall is closer to the central point M than the second cambered wall;
a generatrix of the first cambered wall is consistent with an extension direction of an optical axis of the second light transmitting assembly;
or an included angle $\theta$ between a generatrix of the first cambered wall and an optical axis of the second light transmitting assembly satisfies the following equation:

$$\theta = A + Bx,$$

where A and B are both preset constants; and
x is a perpendicular distance between any point on the first cambered wall and the optical axis of the second light transmitting assembly, or x is a perpendicular distance between a top edge L of the protrusions and the optical axis of the second light transmitting assembly.

7. The light source assembly according to claim 2, wherein

the protrusion is formed by connecting a first cambered wall and a second cambered wall, the first cambered wall is closer to the central point M than the second cambered wall;
the second cambered wall is a spherical surface;
or the second cambered wall is an aspherical surface;
or the second cambered wall has a radius of curvature greater than or equal to 0.18 and less than or equal to $30\delta$, where $\delta$ is a diameter of a circumcircle of a display screen.

8. The light source assembly according to claim 2, wherein

the protrusion is delimited by a first cambered wall, a second cambered wall and a connecting surface, wherein the first cambered wall and the second cambered wall are connected to two sides of the connecting surface respectively, and a top edge L is composed of points on the connecting surface farthest from the first refractive surface;
the connecting surface is a cambered surface;
or the connecting surface is a spherical surface;
and/or the connecting surface has a radius greater than or equal to 0.1 mm and less than or equal to 10 mm.

9. A 3D printer, comprising: a light source assembly of any one of claims 1 - 8; and

a display screen configured to display a pattern having a specific profile, wherein
the light source assembly is arranged on one side of the display screen, and light emitted by the light source assembly are uniformly projected to the display screen and pass through the display screen to cure resin.

**10.** The 3D printer according to claim 9, wherein
a perpendicular distance a between a vertex of the first light transmitting assembly and a surface of the display screen on the side opposite to the light source assembly is greater than or equal to $0.2\delta$ and less than or equal to $5\delta$, where $\delta$ is a diameter of a circumcircle of the display screen.

400

300

E

200

110  120

100

*FIG. 1*

320

M

320

*FIG. 2*

310

320

*FIG. 3*

M

320

*FIG. 4*

310

320

*FIG. 5*

310

320

L

**FIG. 6**

310

z

(x,y)

x

320

i

θ

321 322

323

e

**FIG. 7**

210

200

220

110 120

100

*FIG. 8*

210

230

240

220

*FIG. 9*

210

230

240

220

*FIG. 10*

210

230

240

222    221

110    120

100

220

*FIG. 11*

*FIG. 12*

## INTERNATIONAL SEARCH REPORT

| | |
|---|---|
| International application No. |
| **PCT/CN2022/104854** |

| A. | CLASSIFICATION OF SUBJECT MATTER |
|---|---|

B29C 64/264(2017.01)i;  B33Y 30/00(2015.01)i

According to International Patent Classification (IPC) or to both national classification and IPC

| B. | FIELDS SEARCHED |
|---|---|

Minimum documentation searched (classification system followed by classification symbols)

B29C64, B33Y

Documentation searched other than minimum documentation to the extent that such documents are included in the fields searched

Electronic data base consulted during the international search (name of data base and, where practicable, search terms used)

CNTXT, WPABSC, ENTXTC, WPABS, ENTXT, USTXT, 读秀, DUXIU, 中国期刊网全文数据库, CJFD: 卢胜海, 深圳市纵维立方科技有限公司, 光源, 发光, 透光, 透镜, 菲涅尔, 弧形, 折射, 均直, 均匀, 凸起, 突起, 凸出, 突出, 圆环, 顶棱, 切线, 夹角, 光轴, 3D打印, 显示屏, 树脂, 直径, 距离, Light 2d source, luminous, translucent, lens, Fresnel, arc, refract+, straight, uniform, convex, bulge, protrusion, ring, apex, tangent, angle, optical 2d axis, "3D" s printing, display, resin, diameter, distance

| C. | DOCUMENTS CONSIDERED TO BE RELEVANT |
|---|---|

| Category* | Citation of document, with indication, where appropriate, of the relevant passages | Relevant to claim No. |
|---|---|---|
| X | CN 110161750 A (BOE TECHNOLOGY GROUP CO., LTD. et al.) 23 August 2019 (2019-08-23) description, paragraphs 36-102, and figures 1-6 | 1-8 |
| Y | CN 110161750 A (BOE TECHNOLOGY GROUP CO., LTD. et al.) 23 August 2019 (2019-08-23) description, paragraphs 36-102, and figures 1-6 | 9-10 |
| Y | CN 207273893 U (SHENZHEN NOVA INTELLIGENT TECHNOLOGY CO., LTD.) 27 April 2018 (2018-04-27) description, paragraphs 26-46, and figures 1-7 | 9-10 |
| X | CN 112008974 A (SHENZHEN ZHINENGPAI TECHNOLOGY CO., LTD.) 01 December 2020 (2020-12-01) description, paragraphs 20-29, and figure 1 | 1 |
| X | CN 214983251 U (SHENZHEN NOVA INTELLIGENT TECHNOLOGY CO., LTD.) 03 December 2021 (2021-12-03) description, paragraphs 30-48, and figures 1-5 | 1 |

☑ Further documents are listed in the continuation of Box C.  ☑ See patent family annex.

| | | | |
|---|---|---|---|
| * | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| **23 November 2022** | **20 December 2022** |

| Name and mailing address of the ISA/CN | Authorized officer |
|---|---|
| **China National Intellectual Property Administration (ISA/ CN)** **No. 6, Xitucheng Road, Jimenqiao, Haidian District, Beijing 100088, China** | |
| Facsimile No. **(86-10)62019451** | Telephone No. |

Form PCT/ISA/210 (second sheet) (January 2015)

## INTERNATIONAL SEARCH REPORT

| International application No. |
| --- |
| **PCT/CN2022/104854** |

**C.    DOCUMENTS CONSIDERED TO BE RELEVANT**

| Category* | Citation of document, with indication, where appropriate, of the relevant passages | Relevant to claim No. |
| --- | --- | --- |
| Y | CN 109094023 A (TIANMA MICRO-ELECTRONICS CO.) 28 December 2018 (2018-12-28) description, paragraphs 39-76, and figures 1-9 | 9-10 |
| A | CN 105711088 A (BEIJING TEN DIMENSIONS TECHNOLOGY CO., LTD.) 29 June 2016 (2016-06-29) entire document | 1-10 |
| A | CN 113985623 A (BEIJING UNIVERSITY OF POSTS AND TELECOMMUNICATIONS) 28 January 2022 (2022-01-28) entire document | 1-10 |
| A | JP 2007-264415 A (DAINIPPON PRINTING CO., LTD.) 11 October 2007 (2007-10-11) entire document | 1-10 |

Form PCT/ISA/210 (second sheet) (January 2015)

**INTERNATIONAL SEARCH REPORT**
**Information on patent family members**

International application No.

**PCT/CN2022/104854**

| Patent document cited in search report | | | Publication date (day/month/year) | Patent family member(s) | | | Publication date (day/month/year) |
|---|---|---|---|---|---|---|---|
| CN | 110161750 | A | 23 August 2019 | WO | 2020233282 | A1 | 26 November 2020 |
| | | | | CN | 110161750 | B | 03 June 2022 |
| CN | 207273893 | U | 27 April 2018 | None | | | |
| CN | 112008974 | A | 01 December 2020 | CN | 212312775 | U | 08 January 2021 |
| CN | 214983251 | U | 03 December 2021 | None | | | |
| CN | 109094023 | A | 28 December 2018 | CN | 109094023 | B | 25 September 2020 |
| CN | 105711088 | A | 29 June 2016 | CN | 105711088 | B | 17 December 2019 |
| CN | 113985623 | A | 28 January 2022 | None | | | |
| JP | 特开2007-264415 | A | 11 October 2007 | None | | | |

Form PCT/ISA/210 (patent family annex) (January 2015)